(19) Europäisches Patentamt
European Patent Office
Office européen des brevets

(11) EP 4 408 946 B1

(12) **EUROPEAN PATENT SPECIFICATION**

(45) Date of publication and mention of the grant of the patent:
**17.09.2025 Bulletin 2025/38**

(21) Application number: **22769757.0**

(22) Date of filing: **20.09.2022**

(51) International Patent Classification (IPC):
***C09J 7/38*** *(2018.01)* ***C08F 220/10*** *(2006.01)*
***C08F 220/18*** *(2006.01)* ***C08L 33/04*** *(2006.01)*
***C09J 133/04*** *(2006.01)*

(52) Cooperative Patent Classification (CPC):
(C-Sets available)
**C09J 7/385; C08F 220/1808; C09J 133/04;**
C09J 2203/334; C09J 2433/00 (Cont.)

(86) International application number:
**PCT/EP2022/076074**

(87) International publication number:
**WO 2023/052196 (06.04.2023 Gazette 2023/14)**

(54) **PRESSURE-SENSITIVE ADHESIVE COMPOSITION COMPRISING A DISPERSED PRESSURE-SENSITIVE ADHESIVE POLYMER FORMED BY EMULSION POLYMERIZATION OF ISOBUTYL ACRYLATE, 2-ETHYLHEXYL ACRYLATE AND/OR 1-OCTYL ACRYLATE, STYRENE AND MONOMERS HAVING AT LEAST ONE ACID GROUP AND OPTIONALLY FURTHER MONOMERS**

HAFTKLEBSTOFFZUSAMMENSETZUNG ENTHALTEND EIN DURCH EMULSIONSPOLYMERISATION VON ISOBUTYLACRYLAT, 2-ETHYLHEXYLACRYLAT UND/ ODER 1-OCTYLACRYLAT, STYROL UND MONOMEREN MIT MINDESTENS EINER SÄUREGRUPPE GEBILDETES POLYMER

COMPOSITION ADHÉSIVE SENSIBLE À LA PRESSION COMPRENANT UN POLYMÈRE DISPERSÉ FORMÉ PAR POLYMÉRISATION EN ÉMULSION D’ACRYLATE D’ISOBUTYLE, D’ACRYLATE DE 2-ÉTHYLHEXYLE ET/OU D’ACRYLATE DE 1-OCTYLE, DE STYRÈNE ET DES MONOMÈRES AYANT AU MOINS UN GROUPE ACIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2021 EP 21199903**
**06.10.2021 EP 21201134**

(43) Date of publication of application:
**07.08.2024 Bulletin 2024/32**

(73) Proprietor: **BASF SE**
**67056 Ludwigshafen am Rhein (DE)**

(72) Inventors:
- **FLEISCHHAKER, Friederike**
  **67056 Ludwigshafen (DE)**
- **GROSS, Michael**
  **67056 Ludwigshafen (DE)**
- **FLECKENSTEIN, Christoph**
  **67056 Ludwigshafen (DE)**
- **MISSKE, Andrea**
  **67056 Ludwigshafen (DE)**
- **GERST, Matthias**
  **67056 Ludwigshafen (DE)**
- **EICHHORN, Sabine**
  **67056 Ludwigshafen (DE)**

(74) Representative: **BASF IP Association**
**BASF SE**
**GBI - Z078**
**67056 Ludwigshafen (DE)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(56) References cited:
**EP-A1- 1 426 428**
**JP-A- 2001 089 730**
**JP-A- 2005 187 677**
**JP-A- 2006 289 708**
**JP-A- 2015 040 241**

(52) Cooperative Patent Classification (CPC): (Cont.)

C-Sets
**C08F 220/1808, C08F 212/08, C08F 220/06, C08F 220/1804;**
C09J 2433/00, C09J 2425/00

## Description

The invention relates to pressure-sensitive adhesive compositions in the form of an aqueous polymer dispersion comprising a dispersed pressure-sensitive adhesive polymer formed by emulsion polymerization of isobutyl acrylate, 2-ethylhexyl acrylate and/or 1-octyl acrylate,,styrene and monomers having at least one acid group and optionally further monomers. The pressure-sensitive adhesive composition may be used to produce self-adhesive articles such as self-adhesive labels, self-adhesive tapes or self-adhesive films.

Aqueous pressure-sensitive adhesives are characterized by their adhesion-cohesion balance. Improved adhesion/cohesion balance is applicable in most pressure-sensitive adhesive applications and in particular for specialty adhesive tapes. Typically one of these properties cannot be increased without reducing the other property. There is however a need to do so. For example high performance tapes need aqueous pressure-sensitive adhesives with high adhesion to various substrates and simultaneously high cohesion (shear resistance), also at elevated temperatures. For label applications high tack is desired to ensure high labelling line speeds while the adhesive needs to provide sufficient cohesion for good convertability. Another need for aqueous pressure-sensitive adhesives is a reduced carbon-footprint. Although this can be achieved by using partially or completely bio-based monomers for producing adhesive polymers, the adhesion/cohesion balance requirement should be also met by the adhesive polymers based at least in part on bio-based monomers.

US 2020/0017725 A1 describes pressure-sensitive adhesive compositions comprising the emulsion polymerization product of a monomer mixture comprising an alkyl ester of (meth)acrylic acid, a vinyl aromatic monomer, a hydroxyl functional (meth)acrylate monomer and an ureido substituted monomer and optional further monomers. EP1426428A1 describes aqueous polymer dispersions containing specific copolymers which are composed of at least four different ethylenically unsaturated monomers used as a pressure sensitive adhesive and which are suitable for a manufacture of self-adhesive products, such as labels, tapes, or films.

It is an object of the present invention to provide aqueous-based (i.e. substantially free from organic solvents) polymeric pressure-sensitive adhesives with good or improved adhesion/cohesion balance.

The present invention provides a pressure-sensitive adhesive composition in the form of an aqueous polymer dispersion comprising at least one dispersed pressure-sensitive adhesive polymer formed by emulsion polymerization

(i) from 10 to 20% by weight, based on the sum of all monomers, of isobutyl acrylate;
(ii) from 30 to 70% by weight, preferably from 40 to 60% by weight, based on the sum of all monomers, of 2-ethylhexyl acrylate, 1-octyl acrylate or a mixture of 2-ethylhexyl acrylate and 1-octyl acrylate;
(iii) from 10 to 20% by weight, based on the sum of all monomers, of styrene
(iv) from 0.1% to 10% by weight, based on the sum of all monomers, of at least one monomer having at least one acid group;
(v) optionally at least one (meth)acrylate alkyl ester monomer different from monomers (i) and (ii) and having, when polymerized as a homopolymer, a glass transition temperature of less than -20 °C;
(vi) optionally at least one functional monomer selected from hydroxyl functional (meth)acrylate monomers and ureido substituted ethylenically unsaturated monomers;
(vii) optionally at least one (meth)acrylate alkyl ester monomer different from monomers (i), (ii) and (v);
(viii) optionally further monomers different from (i) to (vii),

wherein the weight ratio of isobutyl acrylate (i) to the sum of 2-ethylhexyl acrylate and 1-octyl acrylate (ii) is from 1:1.5 to 1:5;

wherein the weight ratio of isobutyl acrylate (i) to styrene (iii) is from 1:5 to 5:1, preferably 1:2 to 2:1;

wherein the glass transition temperature of the pressure-sensitive adhesive polymer is below - 20°C, preferably from -50 to -25 °C, determined by differential scanning calorimetry as the midpoint temperature when evaluating the second heating curve at a heating rate of 20 K/min.

It has been found, that unexpected performance increase can be achieved when isobutyl acrylate is used as co-monomer in specific, varying amounts to prepare acrylic polymer dispersions suitable for pressure-sensitive adhesives for tapes and other applications. Adhesion to nonpolar and polar surfaces remained constant while shear resistance, even at elevated temperatures, was significantly increased.

The reported % by weight values of the monomers in each case relate to the sum of all monomers employed in the polymerization unless otherwise stated.

A pressure-sensitive adhesive is a viscoelastic adhesive which sets to form a film that at room temperature (20°C) remains permanently tacky and adhesive in the dry state. Adhesion to substrates is effected immediately by gentle

pressure.

The text below occasionally uses the designation "(meth)acrylic" or "(meth)acrylate" and similar designations as an abbreviating notation for "acrylic or methacrylic" or "acrylate or methacrylate". In the designation Cx-alkyl (meth) acrylate and analogous designations, x denotes the number of carbon atoms in the alkyl group.

The terms "aqueous polymer dispersion" and "aqueous solvent" refers to solvent systems primarily based on water, preferably containing no or less than 10%, less than 5% or less than 1% by weight of organic solvents, based on the total composition.

The glass transition temperature is determined by differential scanning calorimetry as the midpoint temperature when evaluating the second heating curve at a heating rate of 20 K/min (ASTM D 3418-08).

The pressure-sensitive adhesive polymer is produced from isobutyl acrylate. The amount of isobutyl acrylate monomer (i) is from 10 to 20% by weight, preferably from 12 to 20% by weight, based on the sum of all monomers.

The pressure-sensitive adhesive polymer is produced from 2-ethylhexyl acrylate, 1-octyl acrylate or a mixture of 2-ethylhexyl acrylate and 1-octyl acrylate monomers (ii). The amount of monomer (ii) is from 30 to 70% by weight, preferably from 40 to 60% by weight by weight, based on the sum of all monomers. The weight ratio of isobutyl acrylate (i) to monomers (ii) is from 1:1.5 to 1:5, preferably from 1:2 to 1:4.

The pressure-sensitive adhesive polymer is produced from styrene. The amount of styrene monomer (iii) is from 10 to 20% by weight, preferably from 12 to 19% by weight, based on the sum of all monomers. The weight ratio of isobutyl acrylate (i) to styrene (iii) is from 1:5 to 5:1, preferably 1:2 to 2:1.

The pressure-sensitive adhesive polymer is produced from monomers (iv) having at least one acid group. The amount of monomers (iv) having at least one acid group is from 0.1% to 10% by weight, preferably from 0.2% to 8% by weight, more preferably from 0.5% to 5% by weight, based on the sum of all monomers. Monomers (iv) are monomers having at least one acid group (acid monomers), i.e. ethylenically unsaturated acids or ethylenically unsaturated acid anhydrides, and are polymerizable by free-radical polymerization. Suitable acid monomers are, for example, ethylenically unsaturated carboxylic acids, ethylenically unsaturated sulfonic acids and vinylphosphonic acid. Preferably employed as ethylenically unsaturated carboxylic acids are alpha,beta-monoethylenically unsaturated mono- and dicarboxylic acids comprising 3 to 6 carbon atoms in the molecule. Examples thereof are acrylic acid, methacrylic acid, itaconic acid, maleic acid, fumaric acid, crotonic acid, vinylacetic acid and vinyllactic acid. Examples of suitable ethylenically unsaturated sulfonic acids include vinylsulfonic acid, styrene sulfonic acid, acrylamidomethylpropanesulfonic acid, sulfopropyl acrylate and sulfopropyl methacrylate. Acrylic acid, methacrylic acid, itaconic acid and mixtures thereof are preferred and acrylic acid is particularly preferred.

The pressure-sensitive adhesive polymer is optionally produced from at least one monomer (v) which is a (meth) acrylate alkyl ester monomer different from monomers (i) and (ii) and having, when polymerized as a homopolymer, a glass transition temperature of less than -20 °C (so-called "soft" monomer). The amount of soft (meth)acrylic ester monomer (v) is preferably from 0 to 30% by weight, preferably from 5% to 30% by weight or from 8 to 25% by weight, based on the sum of all monomers. The soft monomers (v) are preferably selected from acrylic esters, in particular from $C_2$- to $C_{10}$-alkyl acrylates, or from $C_3$- to $C_{10}$-alkyl acrylates or from $C_4$- to $C_8$-alkyl acrylates. Suitable examples include ethyl acrylate, n-propyl acrylate, n-butyl acrylate, n-hexyl acrylate, n-heptyl acrylate, 2-octyl acrylate and isooctyl acrylate and also mixtures of these monomers. Most preferred are n-butyl acrylate and 2-octyl acrylate.

The pressure-sensitive adhesive polymer is optionally produced from at least one monomer (vi) which is a functional monomer selected from hydroxyl functional (meth)acrylate monomers and ureido substituted ethylenically unsaturated monomers. The functional monomer has at least one ethylenically unsaturated, radically polymerizable group and at least one functional group selected from hydroxyl groups and ureido groups. The amount of functional monomer (vi) is preferably from 0 to 10% by weight, preferably from 0.1% to 10% by weight or from 0.6 to 7% by weight, based on the sum of all monomers. Suitable hydroxyl functional (meth)acrylate monomers are $C_1$-$C_{10}$-hydroxyalkyl (meth)acrylates which have 1-10 carbon atoms in the hydroxyalkyl group. Most preferred is 2-hydroyxy-ethyl acrylate. Preferred amounts of hydroxyl functional (meth)acrylate monomers are 0.5 to 5 % by weight based on the sum of all monomers.

Suitable ureido substituted ethylenically unsaturated monomers are monomers selected from the group consisting of (meth)acrylate monomers having a substituent of the formula

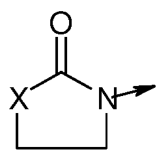

where X is NH or NR, and R is a C1 to C4 alkyl group and the arrow at the N-atom denotes the linkage point of the substituent to the (meth)acrylate monomer. Suitable ureido substituted ethylenically unsaturated monomers are, for example, those of the formula

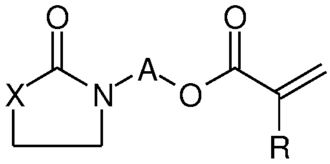

where X is as defined above, R is hydrogen or methyl, and A is a divalent linking group, preferably a C1 to C10 alkyl group or a C2 to C4 alkyl group. Particular preference is given to using ureidoalkyl (meth)acrylates having 1 to 10 C atoms, preferably 2 to 4 C atoms in the alkyl group, Most preferred is ureidoethyl methacrylate (2-(2-oxoimidazolidin-1-yl)ethyl methacrylate; also identified as ureido methacrylate or abbreviated as UMA). Preferred amounts of ureido substituted ethylenically unsaturated monomers are from 0,05 to 2% by weight, more preferred from 0.1 to 2% by weight, or from 0,1 to 1% by weight, based on the sum of all monomers.

The pressure-sensitive adhesive polymer is optionally produced from at least one monomer (vii) which is a (meth) acrylate alkyl ester monomer different from monomers (i), (ii) and (v). The amount of monomers (vii) is preferably from 0 to 20% by weight, or from 0.5 to 10% by weight, based on the sum of all monomers. Monomers (vii) are preferably selected from alkyl (meth)acrylates with 1 to 20 carbon atoms in the alkyl group. Most preferred are methyl acrylate and methyl methacrylate.

The pressure-sensitive adhesive polymer is optionally produced from at least one monomer (viii) which is different from monomers (i) to (vii). The monomers (viii) are copolymerizable, ethylenically unsaturated compounds. The amount of monomers (viii) is preferably from 0 to 10% by weight or from 0 to 5% by weight, based on the sum of all monomers. Monomers (viii) are for example selected from vinyl esters of carboxylic acids comprising up to 20 carbon atoms, vinylaromatics different from styrene and having up to 20 carbon atoms, ethylenically unsaturated nitriles, vinyl halides, vinyl ethers of alcohols comprising 1 to 10 carbon atoms, aliphatic hydrocarbons having 2 to 8 carbon atoms and one or two double bonds and (meth)acrylamides or mixtures of these monomers. Further monomers additionally include phenyloxyethyl glycol mono(meth)acrylate, glycidyl (meth)acrylate, aminoalkyl (meth)acrylates, for example 2-aminoethyl (meth)acrylate. Alkyl groups preferably have from 1 to 20 carbon atoms. Vinyl esters of carboxylic acids having 1 to 20 carbon atoms are for example vinyl acetate, vinyl laurate, vinyl stearate, vinyl propionate and vinyl versatate. Vinylaromatic compounds include vinyltoluene, alpha- and p-methylstyrene, alpha-butylstyrene, 4-n-butylstyrene, 4-n-decylstyrene. Examples of nitriles are acrylonitrile and methacrylonitrile. The vinyl halides are ethylenically unsaturated compounds substituted by chlorine, fluorine or bromine, preferably vinyl chloride and vinylidene chloride. Examples of vinyl ethers include vinyl methyl ether or vinyl isobutyl ether. Preference is given to vinyl ethers of alcohols comprising 1 to 4 carbon atoms. Suitable hydrocarbons having 4 to 8 carbon atoms and two olefinic double bonds are, for example, butadiene, isoprene and chloroprene.

A preferred pressure-sensitive adhesive composition comprises at least one pressure-sensitive adhesive polymer formed by emulsion polymerization

(i) from 10 to 20% by weight, based on the sum of all monomers, of isobutyl acrylate;
(ii) from 40 to 60% by weight, based on the sum of all monomers, of 2-ethylhexyl acrylate, 1-octyl acrylate or a mixture of 2-ethylhexyl acrylate and 1-octyl acrylate;
(iii) from 10 to 20% by weight, based on the sum of all monomers, of styrene
(iv) from 0.5% to 5% by weight, based on the sum of all monomers, of at least one monomer having at least one acid group, selected from acrylic acid, methacrylic acid, and itaconic acid;
(v) from 5 to 30% by weight, based on the sum of all monomers, at least one monomer selected from n-butyl acrylate and 2-octyl acrylate;
(vi) from 0.5 to 5% by weight, based on the sum of all monomers, of 2-hydroxyethyl acrylate and from 0.1 to 2% by weight, based on the sum of all monomers, of 2-(2-oxoimidazolidin-1-yl)ethyl methacrylate;
(vii) from 0 to 20% by weight, based on the sum of all monomers, of at least one alkyl (meth)acrylate monomer different from monomers (i), (ii) and (v), and selected from alkyl (meth)acrylates with 1 to 20 carbon atoms in the alkyl group;
(viii) from 0 to 10% by weight of further monomers distinct from monomers (i) to (vii), selected from vinyl esters of carboxylic acids comprising up to 20 carbon atoms, vinylaromatics different from styrene and having up to 20 carbon atoms, ethylenically unsaturated nitriles, vinyl halides, vinyl ethers of alcohols comprising 1 to 10 carbon atoms, aliphatic hydrocarbons having 2 to 8 carbon atoms and one or two double bonds and (meth)acrylamides.

Preferably and for sustainability reasons, bio-based materials are used for producing the pressure-sensitive adhesive polymer, which preferably is partly or completely made of partly or fully bio-based monomers. The terms "bio-based" and "of biological origin" are used herein as synonyms. Bio-based materials are materials which are made from a renewable source and have a smaller impact on the environment. They do not require all the refining steps required for petroleum-based products, which are very expensive in terms of energy. The production of $CO_2$ is reduced such that bio-based materials contribute less to global warming. The term "bio-based" indicates that the material is of biological origin and comes from biomaterial and renewable resources. A material of biological origin (biomaterial) is an organic material wherein the carbon comes from the $CO_2$ fixed recently (on a human scale) by photosynthesis from the atmosphere. A biomaterial (carbon of 100% natural origin) has an isotopic ratio $^{14}C/^{12}C$ greater than $10^{-12}$, typically about $1.2\times10^{-12}$, while a fossil material has a zero ratio. Indeed, the isotopic $^{14}C$ is formed in the atmosphere and is then integrated via photosynthesis, according to a time scale of a few tens of years at most. The half-life of the $^{14}C$ is 5730 years. Thus, the materials coming from photosynthesis, namely plants in general, necessarily have a maximum content in isotope $^{14}C$. The determination of the content of biomaterial or of bio-carbon can be carried out in accordance with the standards ASTM D 6866-12, the method B (ASTM D 6866-06) and ASTM D 7026 (ASTM D 7026-04). Preferably, the pressure-sensitive adhesive polymer has a content of bio-carbon of at least 5 mol-%, in particular at least 10 mol-% or at least 15 mol-% or higher, e.g. 20 mol-%, 30 mol-% or 40 mol-% or higher, based on the total amount of carbon atoms in the pressure-sensitive adhesive polymer. A polymer which is partly made of fully or partly bio-based monomers is a polymer where not all monomers used in the polymerization are partly or fully bio-based monomers. A partly bio-based monomer is a monomer where not all C-atoms are bio-based, for example (meth)acrylic acid esters where only the acid part or only the alcohol part is bio-based.

It is also possible that at least part of the materials used for producing the pressure-sensitive adhesive polymer are renewable raw materials according to the mass balance approach. Accordingly, in addition to fossil feeds, also renewable feeds such as bio-naphtha (as e.g. described in EP 2 290 045 A1 or EP 2 290 034 A1), bio-methane or palm oil enter the chemical production system, such as for example a steam cracker. The renewable feeds are converted into products along the chemical value chain, such as acrylic acid, isobutanol, isobutyl acrylate, styrene or 2-ethylhexyl acrylate. The content of renewable material of these products is defined by the mass balance approach and can be allocated to these products, preferably certified according to the REDcert[2] certification.

Suitable bio-based materials for producing the pressure-sensitive adhesive polymer are for example (meth) acrylic esters, wherein the(meth)acrylic acid component or the alcohol component or both are bio-based. Various methods of producing bio-based acrylic acid from renewable plant materials are mentioned in EP 2626397 A1. Suitable bio-based alcohols are for example bio-based isobutanol, bio-based n-butanol, bio-based iso-pentanol (3-methylbutan-1-ol), bio-based 2-octanol, bio-based 1-octanol and bio-based n-heptanol. Preferred partly bio-based monomers are esters of (meth)acrylic acid and bio-based alcohols, preferably bio-based isobutanol, bio-based n-butanol, bio-based iso-pentanol (3-methylbutan-1-ol), bio-based 2-octanol, bio-based 1-octanol and bio-based n-heptanol. Preferred fully bio-based monomers are esters of bio-based acrylic acid and bio-based alcohols as mentioned above. Preferably, at least 50 wt.%, more preferred 100 wt.% of isobutyl acrylate monomer (i) is made from bio-based isobutanol and not bio-based or bio-based acrylic acid, i.e. preferably at least the carbon atoms of the isobutyl group of isobutyl acrylate (i) are of biological origin. Preferably, monomers (v) comprise 2-octyl acrylate wherein at least the carbon atoms of the 2-octyl group of 2-octyl acrylate are of biological origin. Preferably, monomers (ii) comprise 1-octyl acrylate wherein at least the carbon atoms of the 1-octyl group of 1-octyl acrylate are of biological origin.

The glass transition temperature (Tg) of the pressure-sensitive adhesive polymer is below -20°C, preferably from -50 to -25 °C. Through targeted variation of monomer type and quantity, those skilled in the art are able according to the invention to produce aqueous polymer compositions whose polymers have a glass transition temperature in the desired range. Orientation is possible using the Fox equation. According to Fox (T.G. Fox, Bull. Am. Phys. Soc. 1956 [Ser. II] 1, page 123 and according to Ullmann's Encyclopedia of Industrial Chemistry, vol. 19, page 18, 4th edition, Verlag Chemie, Weinheim, 1980), the glass transition temperature of copolymers is given to a good approximation by:

$$1/T_g = x^1/T_g^1 + x^2/T_g^2 + .... x^n/T_g^n,$$

wherein $x^1$, $x^2$, .... $x^n$ are the mass fractions of the monomers 1, 2, .... n and $T_g^1$, $T_g^2$, .... $T_g^n$ are the glass transition temperatures in degrees Kelvin of the polymers constructed from only one of the monomers 1, 2, .... n at a time. The $T_g$ values for the homopolymers of the majority of monomers are known and are listed for example in Ullmann's Encyclopedia of Industrial Chemistry, vol. 5, vol. A21, page 169, VCH Weinheim, 1992; further sources for glass transition temperatures of homopolymers are, for example, J. Brandrup, E.H. Immergut, Polymer Handbook, 1st Ed., J. Wiley, New York 1966, 2nd Ed. J. Wiley, New York 1975, and 3rd Ed. J. Wiley, New York 1989.

The polymer dispersions employed according to the invention are obtainable by free-radical emulsion polymerization of ethylenically unsaturated, free-radically polymerizable compounds (monomers). The emulsion polymerization comprises polymerizing ethylenically unsaturated compounds (monomers) in water using ionic and/or nonionic emulsifiers and/or protective colloids or stabilizers as surface-active compounds to stabilize the monomer droplets and the polymer particles subsequently formed from the monomers. The surface-active substances are typically used in amounts of 0.1 to 10 parts by weight, preferably 0.2 to 5 parts by weight, based on 100 parts by weight of the monomers to be polymerized.

A detailed description of suitable protective colloids can be found in Houben-Weyl, Methoden der organischen Chemie [Methods of Organic Chemistry], volume XIV/1, Makromolekulare Stoffe [Macromolecular Materials], Georg-Thieme-Verlag, Stuttgart, 1961, p. 411 to 420. Useful emulsifiers include anionic, cationic and also nonionic emulsifiers. As surface-active substances it is preferable to employ emulsifiers whose molecular weight is typically below 2000 g/mol in contrast with the protective colloids. When mixtures of surface-active substances are used, the individual components must of course be compatible with one another; in case of doubt, this may be checked on the basis of a few preliminary experiments. Preference is given to using anionic and nonionic emulsifiers as surface-active substances. Customary accompanying emulsifiers are for example ethoxylated fatty alcohols (EO degree: 3 to 50, alkyl radical: $C_8$ to $C_{36}$), ethoxylated mono-, di- and trialkylphenols (EO degree: 3 to 50, alkyl radical: $C_4$ to $C_9$), alkali metal salts of dialkyl esters of sulfosuccinic acid and alkali metal and ammonium salts of alkyl sulfates (alkyl radical: $C_8$ to $C_{12}$), of ethoxylated alkanols (EO degree: 4 to 30, alkyl radical: $C_{12}$ to $C_{18}$), of ethoxylated alkylphenols (EO degree: 3 to 50, alkyl radical: $C_4$ to $C_9$), of alkylsulfonic acids (alkyl radical: $C_{12}$ to $C_{18}$) and of alkylarylsulfonic acids (alkyl radical: $C_9$ to $C_{18}$).

Further suitable emulsifiers are compounds of the general formula

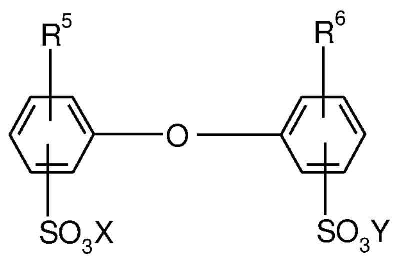

wherein R5 and R6 are hydrogen or C4- to C14-alkyl and are not simultaneously hydrogen, and X and Y may be alkali metal ions and/or ammonium ions. R5, R6 are preferably linear or branched alkyl radicals having 6 to 18 carbon atoms or hydrogen and in particular having 6, 12 and 16 carbon atoms, wherein R5 and R6 are not both simultaneously hydrogen. X and Y are preferably sodium, potassium or ammonium ions, wherein sodium is particularly preferred. Compounds in which X and Y are sodium, R5 is a branched alkyl radical having 12 carbon atoms and R6 is hydrogen or R5 are particularly advantageous. Often employed are industrial mixtures comprising a proportion of 50% to 90% by weight of the monoalkylated product. Commercially available products of suitable emulsifiers are for example Dowfax®2 A1, Emulan® NP 50, Dextrol® OC 50, Emulgator 825, Emulgator 825 S, Emulan®OG, Texapon® NSO, Nekanil® 904 S, Lumiten® I-RA, Lumiten® E 3065, Disponil® FES 77, Lutensol® AT 18, Steinapol® VSL, Emulphor® NPS 25, STEOL® TSP-16N (tristyrylphenol ether sulfate, ammonium salt) and Abex® 2535 (alkyl phenol ethoxylate). Ionic emulsifiers or protective colloids are preferred for the present invention. Particular preference is given to ionic emulsifiers, in particular salts and acids, such as carboxylic acids, sulfonic acids and sulfates, sulfonates or carboxylates. Also employable in particular are mixtures of ionic and nonionic emulsifiers.

The polymerization may also be carried out in the presence of a protective colloid. Protective colloids are polymeric compounds which upon solvation bind large quantities of water and are capable of stabilizing dispersions of water-insoluble polymers. In contrast to emulsifiers, they generally do not lower the interfacial surface tension between polymer particles and water. The number-average molecular weight of protective colloids is above 1000 g/mol for example.

The emulsion polymerization may be initiated using water-soluble initiators. Water-soluble initiators are for example ammonium salts and alkali metal salts of peroxodisulfuric acid, for example sodium peroxodisulfate, hydrogen peroxide or organic peroxides, for example tert-butyl hydroperoxide. Also suitable as initiators are so-called reduction-oxidation (redox) initiator systems. Redox initiator systems consist of at least one inorganic or organic reducing agent and an inorganic or organic oxidizing agent. The oxidizing component is, for example, the emulsion polymerization initiators already mentioned hereinabove. The reductant components are for example alkali metal salts of sulphurous acid, such as for example sodium sulfite, sodium hydrogensulfite, alkali metal salts of disulfurous acid such as sodium disulfite, bisulfite addition compounds of aliphatic aldehydes and ketones, such as acetone bisulfite or reducing agents such as hydroxymethanesulfinic acid and the salts thereof, or ascorbic acid. The redox initiator systems may be employed with co-use of soluble metal compounds whose metallic component may appear in a plurality of valence states. Typical redox initiator systems are, for example, ascorbic acid/iron(II) sulfate/sodium peroxydisulfate, tert-butyl hydroperoxide/sodium disulfite, tert-butyl hydroperoxide/sodium hydroxymethanesulfinic acid. The individual components, for example the reductant component, may also be mixtures, for example a mixture of the sodium salt of hydroxymethanesulfinic acid and sodium disulfite.

The recited initiators are generally employed in the form of aqueous solutions, the lower concentration limit being determined by the amount of water acceptable in the dispersion and the upper concentration limit being determined by the solubility in water of the particular compound. The concentration of the initiators is generally from 0.1 to 30 wt%, preferably

from 0.5 to 20 wt% and more preferably from 1.0 to 10 wt% based on the monomers to be polymerized. It is also possible to use two or more different initiators in the emulsion polymerization.

The polymerization may employ chain transfer agents. It is preferable when no chain transfer agents are employed. When chain transfer agents are employed they are preferably employed in amounts of at least 0.01 parts by weight of chain transfer agent per 100 parts by weight of monomers, for example of 0.01 to 5 parts by weight, or of 0.01 to 3 parts by weight, preferably of 0.01 to 0.75 parts by weight, to 100 parts by weight of the monomers to be polymerized. This makes it possible to control/reduce the molar mass of the emulsion polymer through a chain termination reaction. The chain transfer agents are bonded to the polymer in this procedure, generally to the chain end. The addition may be carried out during the polymerization continuously or in stages. Suitable chain transfer agents are for example organic compounds comprising sulfur in bonded form (for example compounds having a thiol group), aliphatic and/or araliphatic halogen compounds, aliphatic and/or aromatic aldehydes, unsaturated fatty acids (for example oleic acid), dienes having non-conjugated double bonds (for example divinylmethane, terpinols or vinylcyclohexene), hydrocarbons having easily abstractable hydrogen atoms (for example toluene), organic acids or salts thereof (for example formic acid, sodium formate, ammonium formate), alcohols (for example isopropanol) and phosphorus compounds (for example sodium hypophosphite). It is alternatively possible to employ compatible mixtures of the above mentioned chain transfer agents. The chain transfer agents are generally compounds of low molecular mass, having a molar weight of less than 2000, in particular less than 1000 g/mol. It is advantageous when a sub-amount or the total amount of the chain transfer agents is supplied to the aqueous reaction medium before initiation of the free-radical polymerization. In addition, a sub-amount or the total amount of the free-radical chain-transferring compound may advantageously also be supplied to the aqueous reaction medium together with the monomers during the polymerization. Preferred organic compounds comprising sulfur in bonded form are in particular tert-butyl mercaptan, ethyl thioglycolate, mercaptoethanol, mercaptopropyl trimethoxysilane, tert-dodecyl mercaptan, thiodiglycol, ethylthioethanol, di-n-butyl sulfide, 2-isopropyl sulfide, di-n-octyl sulfide, diphenyl sulfide, diisopropyl disulfide, 2-mercaptoethanol, 1,3-mercaptopropanol, 3-mercaptopropane-1,2-diol, 1,4-mercaptobutanol, thioglycolic acid, 3-mercaptopropionic acid, mercaptosuccinic acid, thioacetic acid and thiourea. Particularly preferred thio compounds are tert-butyl mercaptan, ethyl thioglycolate, mercaptoethanol, mercaptopropyl trimethoxysilane, 2-ethylhexyl thioglycolate (EHTG), isooctyl 3-mercaptopropionate (IOMPA) or tert-dodecyl mercaptan (tDMK).

The emulsion polymerization is generally carried out at 30°C to 130°C, preferably at 50°C to 95°C. The polymerization medium may consist either only of water or of mixtures of water and liquids miscible therewith such as methanol. Preference is given to using solely water.

The emulsion polymerization may be carried out either as a batch process or in the form of a feed process, including the staged and gradient operating modes of a feed process. Preference is given to the feed process in which a portion of the polymerization batch is initially charged, heated to the polymerization temperature and incipiently polymerized before the remainder of the polymerization batch is supplied, typically via a plurality of spatially separate feeds, one or more of which comprise the monomers in pure form or in emulsified form, continuously, in stages or with superposition of a concentration gradient while maintaining the polymerization in the polymerization zone.

It is also possible in the polymerization to initially charge a polymer seed for more effective adjustment of particle size for example. The polymerization is preferably carried out with seed control, i.e., in the presence of polymer seed (seed latex). Seed latex is an aqueous dispersion of finely divided polymer particles having an average particle diameter of preferably 20 to 40 nm. Seed latex is used in an amount of preferably 0.01 to 0.5 parts by weight, particularly preferably of 0.03 to 0.3 parts by weight, based on 100 parts by weight of monomers. A latex based on polystyrene or based on polymethyl methacrylate is suitable for example. One preferred seed latex is polystyrene seed.

The manner in which the initiator is added to the polymerization vessel over the course of the free-radical aqueous emulsion polymerization is known to those of ordinary skill in the art. It may be either initially charged to the polymerization vessel in its entirety or employed continuously or in a staged manner at the rate of its consumption over the course of the free-radical aqueous emulsion polymerization. This specifically depends on the chemical nature of the initiator system and on the polymerization temperature. Preference is given to initially charging a portion and supplying the remainder to the polymerization zone at the rate of its consumption. To remove the residual monomers, initiator is typically also added after termination of the actual emulsion polymerization, i.e. after a monomer conversion of at least 95%. In the feed process, the individual components may be added to the reactor from above, from the side or from below through the reactor floor.

The emulsion polymerization generally affords aqueous dispersions of the polymer having solids contents of from 15% to 75% by weight, preferably from 40% to 75% by weight, or 40% to 60% by weight, particularly preferably not less than 50% by weight. Dispersions having a very high solids content are preferred for a high reactor space/time yield. In order that solids contents of >60 wt% may be achieved, a bi- or polymodal particle size should be established since otherwise the viscosity becomes too high and the dispersion is difficult to handle. A new generation of particles may be produced, for example, by addition of seed (EP 81083), by addition of excess emulsifier amounts or by addition of miniemulsions. A further advantage associated with low viscosity at high solids content is improved coating characteristics

at high solids contents. Production of (a) new particle generation(s) may be effected at any point in time. It is guided by the particle-size distribution that is sought for a low viscosity. The polymer thus produced is preferably used in the form of its aqueous dispersion. The size distribution of the dispersion particles may be monomodal, bimodal or multimodal.

The neutralization of acid groups of the polymer is preferably carried out by feeding of a neutralizing agent during or after the polymerization, wherein the acid groups are fully or partially neutralized by feeding of a base. The neutralizing agent may be added for example in a separate feed simultaneously with the feeding of the monomer mixture. After feeding of all monomers it is preferable when the amount of neutralizing agent necessary for neutralization of at least 10%, preferably from 10% to 100% or from 25% to 90%, of acid equivalents is present in the polymerization vessel. A particularly preferred neutralizing agent is ammonia. The pH of the polymer dispersion is preferably adjusted to a pH greater than 4.5, more particularly to a pH of between 5 and 8.

The pressure-sensitive adhesive composition preferably comprises at least one tackifier (tackifying resin). The amount of tackifier is preferably from 5 to 40 parts by weight based on 100 parts by weight of adhesive polymer. A tackifier is a polymeric or oligomeric additive for adhesive polymers or generally for elastomers which increases their autoadhesion (tack, inherent tack, self-adhesion) so that after short, light contact pressure they adhere to surfaces firmly. Tackifiers include for example natural resins, such as colophony resins and the derivatives thereof formed by disproportionation or isomerization, polymerization, dimerization or hydrogenation or terpene resins. These may be in their salt form (with for example monovalent or polyvalent counterions (cations)) or preferably in their esterified form. Alcohols used for esterification may be monohydric or polyhydric. Examples include methanol, ethanediol, diethylene glycol, triethylene glycol, 1,2,3-propanethiol, pentaerythritol. Further employable tackifying resins are hydrocarbon resins, for example coumarone-indene resins, polyterpene resins, hydrocarbon resins based on unsaturated CH compounds, such as butadiene, pentene, methylbutene, isoprene, piperylene, divinylmethane, pentadiene, cyclopentene, cyclopentadiene, cyclohexadiene, styrene, alphamethylstyrene, vinyltoluene. Tackifiers are known for example from Adhesive Age, July 1987, pages 19-23 or Polym. Mater. Sci. Eng. 61 (1989), pages 588-592.

Polyacrylates having a low molar weight can also be used as tackifiers. These polyacrylates preferably have a weight-average molecular weight $M_w$ less than 50 000, in particular less than 30 000. The tackifying polyacrylates preferably consist to an extent of at least 60% by weight, in particular at least 80% by weight, of $C_1$-$C_8$ alkyl (meth)acrylates. Suitable tackifiers include for example the low-molecular-weight polymers and oligomers described in WO 2013/117428 having a weight-average molecular weight of less than 50 000 and a glass transition temperature of not less than -40°C to not more than 0°C, preferably of not less than -35°C to not more than 0°C, producible by emulsion polymerization in the presence of at least one molecular weight regulator and producible from a monomer mixture comprising at least 40% by weight of at least one C1- to C20-alkyl (meth)acrylate.

Preferred tackifiers are selected from the group consisting of natural resins, hydrocarbon resins, tackifying polyacrylates or mixtures thereof. Particularly preferred tackifiers include natural or chemically modified colophony resins. Colophony resins consist predominantly of abietic acid or abietic acid derivatives or hydrogenated derivatives thereof. The tackifiers may be added to the polymer dispersion in simple fashion. The tackifiers themselves are preferably in the form of an aqueous dispersion. The amount by weight of the tackifiers is preferably 5 to 100 parts by weight, particularly preferably, 5 to 50, 5 to 40, or 10 to 40 parts by weight, based on 100 parts by weight of polymer (solid/solid).

The pressure-sensitive adhesive composition may comprise further additives, for example fillers, dyes, levelling agents, flow control assistants, thickeners (preferably associative thickeners), defoamers, crosslinkers, plasticizers, pigments, UV protectants or wetting agents. For better wetting of surfaces the pressure-sensitive adhesives may include in particular wetting auxiliaries (wetting agents), for example fatty alcohol ethoxylates, alkylphenol ethoxylates, sulfosuccinic esters, nonylphenol ethoxylates, polyoxyethylene/polyoxypropylene copolymers or sodium dodecylsulfonates. The amount of additives is preferably 0.05 to 10 parts by weight, 0.1 to 5 parts by weight, especially 0.1 to 3 parts by weight, per 100 parts by weight of adhesive polymer (solid).

A tackified pressure-sensitive adhesive composition preferably comprises (based on solids)

60 - 95 parts by weight of pressure-sensitive adhesive polymer,
5 - 40 parts by weight of tackifier and
0 - 10 parts by weight of further additives.

A non-tackified pressure-sensitive adhesive composition preferably comprises (based on solids)

90 - 100 parts by weight of pressure-sensitive adhesive polymer and
0 - 10 parts by weight of further additives.

The pressure-sensitive adhesive composition is preferably a one-component pressure-sensitive adhesive. One-component adhesives are adhesives to which no external crosslinking agent (for example isocyanate crosslinker) is added immediately before use.

After drying, the pressure-sensitive adhesive composition forms a film having a tack of preferably not less than 10 N/25 mm measured as loop tack relative to a steel surface (adhesive applied at an application rate of 60 g/m$^2$ on a 36 μm-thick polyethylene terephthalate film, measured relative to steel at 23°C and 50% relative humidity at a tear-off speed of 300 mm/min, see examples for details).

After drying, the pressure-sensitive adhesive composition forms a film having a peel strength of preferably greater than 2 N/25 mm relative to a polyethylene surface (measured at an application rate of 60 g/m$^2$, applied on a 36 μm-thick polyethylene terephthalate film, measured relative to polyethylene at 23°C and 50% relative humidity at a tear-off speed of 300 mm/min, see examples for details).

After drying, the pressure-sensitive adhesive composition forms a film having a shear resistance at 70°C of preferably at least 200 minutes, measured as described in the examples.

The pressure-sensitive adhesive composition may be used to produce self-adhesive articles. The articles are at least partially coated with the pressure-sensitive adhesive. The self-adhesive articles may be self-adhesive labels, self-adhesive tapes or self-adhesive films including graphic films and protective films. Suitable carrier materials are for example paper, plastic films and metal foils. The inventive self-adhesive tapes may be tapes of the above mentioned substances coated on one or both sides. The inventive self-adhesive labels may be labels made of paper or a thermoplastic film. Adhesive tapes made of thermoplastic film are particularly preferred. Suitable thermoplastic films include for example films made of polyolefins (for example polyethylene or polypropylene), polyolefin copolymers, films made of polyesters (for example polyethylene terephthalate), polyvinyl chloride or polyacetate. The surfaces of the thermoplastic polymer films have preferably been corona-treated. Foamed carriers are also possible. The labels have been coated with adhesive on one side. Preferred substrates for the self-adhesive articles are paper and polymer films.

The self-adhesive articles have been at least partially coated with a pressure-sensitive adhesive according to the invention on at least one surface. The adhesive may be applied to the articles by customary methods such as roller application, knife coating or spreading. The application rate is preferably 0.1 to 300 g, more preferably 2 to 150 g of solid per m$^2$. Application is generally followed by a drying step for removal of the water. The water may be removed by drying at 50°C to 150°C for example. The thus obtained coated substrates are used for example as self-adhesive articles, such as adhesive labels, adhesive tapes or adhesive films. To this end the carriers may be cut into adhesive tapes, labels or films before or after application of the adhesive. The side of the substrates coated with pressure-sensitive adhesive may be covered with a release paper, for example with a siliconized paper, for later use.

The substrates to which the self-adhesive articles may advantageously be applied may be metal, wood, glass, paper or plastic for example. The self-adhesive articles are especially suitable for bonding to packaging surfaces, cardboard boxes, plastic packaging, books, windows, vapor barriers, motor vehicle bodies, tires or vehicle body parts.

The invention further relates to the use of the pressure-sensitive adhesive composition described hereinabove for producing self-adhesive labels, self-adhesive tapes or self-adhesive films. The invention further relates to self-adhesive articles coated with a pressure-sensitive adhesive composition described hereinabove.

The invention further relates to a process for producing a self-adhesive article.

The process comprises the steps of

(1) providing a pressure-sensitive adhesive composition as described hereinabove and
(2) coating at least part of a surface of a substrate with the pressure-sensitive adhesive composition.

## Examples

The following input materials and abbreviations are used:

| | |
|---|---|
| EHA | 2-ethylhexyl acrylate |
| BA | n-butyl acrylate |
| MMA | methyl methacrylate |
| S | styrene |
| IBA | isobutyl acrylate |
| bio-IBA | isobutyl acrylate having 57% of bio-carbon from bio-based isobutanol (BCH Brühl-Chemikalien Handel GmbH) |
| AA | acrylic acid |
| HEA | 2-hydroxyethyl acrylate |
| HPA | 2-hydroxypropyl acrylate |
| UMA | ureido methacrylate; 2-(2-oxoimidazolidin-1-yl)ethyl methacrylate |
| 2-OA | 2-octyl acrylate |
| pphm | parts by weight per 100 parts by weight of monomers (parts per hundred monomer) |
| SC | standard conditions, 50 % rel. humidity, 1 bar, 23°C |

| | |
|---|---|
| Tg | glass transition temperature |
| HDPE | high density polyethylene |
| STEOL® TSP-16N | anionic surfactant from Stepan |
| Abex® 2535 | non-ionic surfactant from Solvay |
| Rongalit® C | sodium hydroxymethanesulfinate from Brueggemann |
| Aerosol® OT-75 | surfactant from Solvay |
| Lumiten® I-SC | wetting agent; anionic surfactant |
| Snowtack® 933E | rosin-ester based tackifier dispersion |

Preparation of the pressure-sensitive adhesive polymer dispersions

Feed 1 is prepared by mixing 233.3 g water, 57.0 g of a 20 wt% aqueous solution of STEOL® TSP-16N, 6.1 g Abex 2535, 760 g monomers according to table 1. Feed 2 is prepared by dissolving 2.3 g sodium persulfate in 54.8 g water. A reactor equipped with stirrer, temperature control, nitrogen inlet and several injection possibilities is charged with 308.4 g water and 2.3 g of a 20 wt% aqueous solution of STEOL® TSP-16N. The reaction mixture is purged with nitrogen and heated to 78 °C. At 78 °C, 31 g of feed 1 is added to the reactor. Then 1.5 g sodium persulfate dissolved in 13.7 g water are charged to the reactor. The nitrogen purge is turned off. 15 minutes after the exothermic peak is reached, the rest of feed 1 and feed 2 is fed into the reactor within 3.5 hours and the reactor temperature is kept at 85 °C. Afterwards, the reaction mixture is stirred at 87 °C for 45 minutes. 2.7 g t-butyl hydroperoxide in 20 g water (feed 3) and 1.2 g Rongalit C in 16 g water are added to the reaction mixture in 45 min. After additional 15 min the reactor is cooled to room temperature and the pH is adjusted to 6.0-8.0 with 25% aqueous ammonia solution. Then 7.6 g Aerosol® OT-75 is added and mixed for 1 hour.

Table 1: Monomer compositions of pressure-sensitive adhesive polymer dispersions; amounts in parts by weight

| | E1 | E2 | E3 | E4 | C1 | C2 |
|---|---|---|---|---|---|---|
| EHA | 50 | 50 | 50 | 50 | 50 | 50 |
| BA | 13.51 | 13.51 | 6.75 | - | 28.5 | 25.5 |
| IBA | 15.74 | - | 15.74 | 15.74 | - | - |
| bio-IBA | - | 15.74 | - | - | - | - |
| MMA | - | - | - | - | 3.75 | 3.75 |
| S | 17 | 17 | 17 | 17 | 14 | 17 |
| AA | 1.5 | 1.5 | 1.5 | 1.5 | 1.5 | 1.5 |
| HEA | 2 | 2 | 2 | 2 | 2 | 2 |
| UMA | 0.25 | 0.25 | 0.25 | 0.25 | 0.25 | 0.25 |
| 2-OA | - | - | 6.75 | 13.51 | - | - |
| Tg | -31 °C | -32 °C | -31 °C | -31 °C | -35 °C | -32 °C |
| Particle diameter | 181 nm | 174 nm | 177 nm | 184 nm | 167 nm | 170 nm |
| Examples labelled C... are comparative examples, examples labelled E... are inventive examples. | | | | | | |

Compared to the comparative examples, BA and MMA are replaced by sufficient amounts of IBA or IBA and 2-OA so as to result in polymers according to the invention with almost the same glass transition temperature.

Preparation of pressure-sensitive adhesive compositions E5 and E6 for self-adhesive labels Pressure-sensitive adhesive compositions for self-adhesive labels are prepared by mixing pressure-sensitive adhesive polymer dispersions with additives and tackifiers according to table 2.

Table 2: Pressure-sensitive adhesive compositions

| Example | Polymer dispersion | Additive | Tackifier |
|---|---|---|---|
| E5 | E2 | 0.5 wt% Lumiten® I-SC | - |
| E6 | E2 | 0.5 wt% Lumiten® I-SC | Snowtack® 933E [1)] |
| [1)] weight ratio adhesive polymer:tackifier = 80:20 based on solids | | | |

Performance tests

To test the adhesive properties for use in adhesive tapes, the pressure-sensitive adhesives of the examples are coated at an application rate of about 60 g/$m^2$ (dried film) onto Hostaphan® RN 36 (biaxially oriented film made of polyethylene terephthalate, 36 μm thickness) as the carrier and dried for 5 minutes at 90°C.

To test the adhesive properties for use in paper labels, the pressure-sensitive adhesives of examples E5 and E6 are coated at an application rate of about 18 g/$m^2$ (dried film) onto siliconized release paper and dried. The dried adhesive polymer film is then transferred onto label paper facestock material.

Unless otherwise stated, the substrates coated with adhesive are stored for 24 h under standard conditions, before the adhesive properties are determined under standard conditions (SC: 23°C, 50% relative humidity).

**Loop tack** (quick stick, corresponding to FINAT test method FTM9)

Determining loop tack (also known as surface tack or quick stick) comprises determining the force required for removal from a substrate of an adhesive applied to a carrier material by pressureless adhesive bonding onto the substrate at a defined tear-off speed, measured at 23°C and 50% relative humidity. Test substrates are stainless steel, HDPE or glass. A test strip of 25 mm in width and 250 mm in length is cut from the carrier coated with adhesive and stored for at least 16 hours at SC. Both ends of the test strip are folded over to about 1 cm in length with the adhesive side facing inward. The adhesive strip is used to form a loop with the adhesive side facing outward, and the two ends are brought together and clamped into the upper jaw of a tensile testing machine. The test substrate holder is clamped into the lower jaw. The adhesive strip loop is moved downward by the tensile testing machine at a speed of 300 mm/minute, thus bonding the adhesive side of the test strip to the substrate without additional pressure. The tensile testing machine is halted and immediately moved upward again when the bottom edge of the upper jaw is 40 mm above the substrate. The test result is reported in N/25 mm width. The maximum value on the display (Fmax) is read off as the measure of surface tack. An average of two individual results is taken.

**Peel test** (corresponding to FINAT test method FTM1)

Peel strength is a measure of adhesion measured at 23°C and 50% relative humidity. In the determination of peel strength a 25 mm wide test strip is in each case bonded to a test specimen made of HDPE, stainless steel or glass and rolled on twice with a 2 kg roller (diameter = 85 mm, Shore hardness = 80A). One end is then clamped in the upper jaws of a tensile strain tester. The adhesive strip is removed from the test surface at 300 mm/min at an angle of 180°, i.e. the adhesive strip is bent and removed parallel to the test specimen and the force required therefor is measured. The measure for peel strength is the force in N/25 mm obtained as the average value from five measurements. The peel strength was determined 24 hours after bonding. The adhesive strength has fully developed after this time. An average of two individual results is taken.

**Shear strength** (corresponding to FINAT test method FTM8)

Shear strength is a measure of cohesion measured at SC or at 70 °C. The carrier coated with pressure-sensitive adhesive is cut into test strips of 25 mm or 12.5 mm in width. To determine shear strength the test strips are bonded to stainless steel (adhesive tapes) or glass (paper labels) with a bonded area of 25 x 25 mm (measurements with adhesive tapes at 70°C; or paper labels at SC) or 12.5 x 12.5 mm (measurements with adhesive tapes at SC) and rolled on twice with a 2 kg roller (diameter = 85 mm, Shore hardness = 80A), stored for 10 minutes or 24 hours at SC (for measurements with paper labels or adhesive tapes respectively) and subsequently subjected to hanging stress with a 1 kg weight (measurements with adhesive tapes at SC; or paper labels at SC) or a 2 kg weight (measurements with adhesive tapes at 70°C). The measure of shear strength is the time in minutes until the weight falls off; the average of 3 measurements is taken in each case.

The results of the performance tests are shown in the following tables.

Table 3: Performance results adhesive tapes

| Example | Loop tack [N/25mm] | | Peel strength [N/25mm] | | Shear strength [min] | |
|---|---|---|---|---|---|---|
| | Steel | HDPE | Steel | HDPE | Steel, SC | Steel, 70°C |
| E1 | 13.8 | 7.8 | 16.2 | 2.9 | 2593 | >6000 |
| E2 | 13.4 | 9.0 | 16.6 | 3.6 | 2033 | >6000 |
| E3 | 14.3 | 9.5 | 16.0 | 3.2 | >6000 | >6000 |

(continued)

| Example | Loop tack [N/25mm] | | Peel strength [N/25mm] | | Shear strength [min] | |
|---|---|---|---|---|---|---|
| | Steel | HDPE | Steel | HDPE | Steel, SC | Steel, 70°C |
| E4 | 15.7 | 9.8 | 15.2 | 3.3 | 2139 | >6000 |
| C1 | 12.4 | 8.2 | 15.5 | 2.8 | 773 | 116 |
| C2 | 14.0 | 7.9 | 17.2 | 2.7 | 1525 | 192 |

The examples show that examples with polymers comprising isobutyl acrylate units result in high shear strength and simultaneously sufficiently high peel strength (high cohesion and simultaneously sufficiently high adhesion).

Table 4: Performance results adhesive labels

| Example | Loop tack [N/25mm] | | Peel strength [N/25mm] | | Shear strength [min] |
|---|---|---|---|---|---|
| | HDPE | Glass | HDPE | Glass | Glass, SC |
| E5 | 8.8 | 10.9 | 10.1 | 15.5 | >8400 |
| E6 | 13.1 | 8.5 | 14.3 | 15.7 | >8400 |

## Claims

1. A pressure-sensitive adhesive composition in the form of an aqueous polymer dispersion comprising at least one dispersed pressure-sensitive adhesive polymer formed by emulsion polymerization

   (i) from 10 to 20%by weight, based on the sum of all monomers, of isobutyl acrylate;
   (ii) from 30 to 70% by weight, based on the sum of all monomers, of 2-ethylhexyl acrylate, 1-octyl acrylate or a mixture of 2-ethylhexyl acrylate and 1-octyl acrylate;
   (iii) from 10 to 20% by weight, based on the sum of all monomers, of styrene;
   (iv) from 0.1% to 10% by weight, based on the sum of all monomers, of at least one monomer having at least one acid group;
   (v) optionally at least one (meth)acrylate alkyl ester monomer different from monomers (i) and (ii) and having, when polymerized as a homopolymer, a glass transition temperature of less than -20 °C;
   (vi) optionally at least one functional monomer selected from hydroxyl functional (meth)acrylate monomers and ureido substituted ethylenically unsaturated monomers;
   (vii) optionally at least one (meth)acrylate alkyl ester monomer different from (i), (ii) and (v);
   (viii) optionally further monomers different from (i) to (vii),
   wherein the weight ration of isobutyl acrylate (i) to 2-ethylhexyl acrylate, 1-octyl acrylate or the mixture of 2-ethylhexyl acrylate and 1-octyl acrylate (ii) is from 1:1.5 to 1:5;
   wherein the weight ration of isobutyl acrylate (i) to styrene (iii) is from 1:5 to 5:1, preferably 1:2 to 2:1;
   wherein the glass transition temperature of the pressure-sensitive adhesive polymer is below -20°C, preferably from -45 to -25 °C, determined by differential scanning calorimetry as the midpoint temperature when evaluating the second heating curve at a heating rate of 20 K/min.

2. The pressure-sensitive adhesive composition according to claim 1, wherein the pressure-sensitive adhesive composition comprises at least one tackifier in an amount of 5 to 40 parts by weight based on 100 parts by weight of polymer.

3. The pressure-sensitive adhesive composition according to claim 1 or 2, wherein the tackifier is selected from the group consisting of natural resins, hydrocarbon resins, tackifying polyacrylates or mixtures thereof.

4. The pressure-sensitive adhesive composition according to any one of claims 1 to 3, wherein monomer (v) is used in amount from 5 to 30% by weight, based on the sum of all monomers.

5. The pressure-sensitive adhesive composition according to any one of claims 1 to 4, wherein monomer (v) is selected from n-butyl acrylate and 2-octyl acrylate.

6. The pressure sensitive adhesive composition according to the preceding claim, wherein at least the carbon atoms of the isobutyl group of isobutyl acrylate (i) and/ or the carbon atoms of the 2-octyl group of 2-octyl acrylate and/or the carbon atoms of the 1-octyl group of 1-octyl acrylate are of biological origin, determined in accordance with the standards ASTM D 6866-12, the method B ASTM D 6866-06 and ASTM D 7026-04.

7. The pressure-sensitive adhesive composition according to any one of claims 1 to 6, wherein monomer (vi) comprises 2-hydroyxyethyl acrylate in an amount from 0.5 to 5% by weight, based on the sum of all monomers.

8. The pressure-sensitive adhesive composition according to any one of claims 1 to 7, wherein monomer (vi) comprises 2-(2-oxoimidazolidin-1-yl)ethyl methacrylate in an amount from 0.1 to 2% by weight, based on the sum of all monomers.

9. The pressure-sensitive adhesive composition according to any one of claims 1 to 8, wherein monomer (vii) is used in an amount from 0 to 20% by weight, based on the sum of all monomers and is at last one monomer different from monomers (i), (ii) and (v), and selected from alkyl (meth)acrylates with 1 to 20 carbon atoms in the alkyl group, preferably methyl acrylate or methyl methacrylate.

10. The pressure-sensitive adhesive composition according to any one of claims 1 to 9, comprising at least one pressure-sensitive adhesive polymer formed by emulsion polymerization

(i) from 10 to 20% by weight, based on the sum of all monomers, of isobutyl acrylate;
(ii) from 40 to 60% by weight, based on the sum of all monomers, of 2-ethylhexyl acrylate, 1-octyl acrylate or a mixture of 2-ethylhexyl acrylate and 1-octyl acrylate;
(iii) from 10 to 20% by weight, based on the sum of all monomers, of styrene
(iv) from 0.5% to 5% by weight, based on the sum of all monomers, of at least one monomer having at least one acid group, selected from acrylic acid, methacrylic acid, and itaconic acid;
(v) from 5 to 30% by weight, based on the sum of all monomers, at least one monomer selected from n-butyl acrylate and 2-octyl acrylate;
(vi) from 0.5 to 5% by weight, based on the sum of all monomers, of 2-hydroxyethyl acrylate and from 0.1 to 2% by weight, based on the sum of all monomers, of 2-(2-oxoimidazolidin-1-yl)ethyl methacrylate;
(vii) from 0 to 20% by weight, based on the sum of all monomers, of at least one alkyl (meth)acrylate monomer different from monomers (i), (ii) and (v), and selected from alkyl (meth)acrylates with 1 to 20 carbon atoms in the alkyl group;
(viii) from 0 to 10% by weight of further monomers distinct from monomers (i) to (vii), selected from vinyl esters of carboxylic acids comprising up to 20 carbon atoms, vinylaromatics different from styrene and having up to 20 carbon atoms, ethylenically unsaturated nitriles, vinyl halides, vinyl ethers of alcohols comprising 1 to 10 carbon atoms, aliphatic hydrocarbons having 2 to 8 carbon atoms and one or two double bonds and (meth)acrylamides.

11. The use of a pressure-sensitive adhesive composition according to any of the preceding claims for producing self-adhesive labels, self-adhesive tapes or self-adhesive films.

12. A self-adhesive article coated with a pressure-sensitive adhesive composition according to any of claims 1 to 10.

13. A process for producing a self-adhesive article, the process comprises the step of coating at least part of a surface of a substrate with a pressure-sensitive adhesive composition according to any of claims 1 to 10.

**Patentansprüche**

1. Haftklebstoffzusammensetzung in der Form einer wässrigen Polymerdispersion umfassend wenigstens ein dispergiertes Haftklebstoffpolymer, gebildet durch Emulsionspolymerisation von

(i) von 10 bis 20 Gew.-%, bezogen auf die Summe aller Monomere, Isobutylacrylat;
(ii) von 30 bis 70 Gew.-%, bezogen auf die Summe aller Monomere, 2-Ethylhexylacrylat, 1-Octylacrylat oder an einem Gemisch von 2-Ethylhexylacrylat und 1-Octylacrylat;
(iii) von 10 bis 20 Gew.-%, bezogen auf die Summe aller Monomere, Styrol;
(iv) von 0,1 bis 10 Gew.-%, bezogen auf die Summe aller Monomere, an wenigstens einem Monomer mit wenigstens einer Säuregruppe;

(v) gegebenenfalls wenigstens einem (Meth)acrylatalkylestermonomer, das von Monomeren (i) und (ii) verschieden ist und, wenn als Homopolymer polymerisiert, eine Glasübergangstemperatur von weniger als -20 °C aufweist;
(vi) gegebenenfalls wenigstens einem funktionellen Monomer ausgewählt aus hydroxyfunktionellen (Meth) acrylatmonomeren und ureidosubstituierten ethylenisch ungesättigten Monomeren;
(vii) gegebenenfalls wenigstens einem (Meth)acrylatalkylestermonomer, das von (i), (ii) und (v) verschieden ist;
(viii) gegebenenfalls weiteren Monomeren, die von (i) bis (vii) verschieden sind,
wobei das Gewichtsverhältnis von Isobutylacrylat (i) zu 2-Ethylhexylacrylat, 1-Octylacrylat oder dem Gemisch von 2-Ethylhexylacrylat und 1-Octylacrylat (ii) von 1:1,5 bis 1:5 beträgt;
wobei das Gewichtsverhältnis von Isobutylacrylat (i) zu Styrol (iii) von 1:5 bis 5:1, vorzugsweise 1:2 bis 2:1, beträgt;
wobei die Glasübergangstemperatur des Haftklebstoffpolymers unter -20 °C liegt, vorzugsweise von -45 bis -25 °C beträgt, bestimmt durch Differentialscanning-Kalorimetrie als die Mittelpunkttemperatur bei der Auswertung der zweiten Heizkurve bei einer Heizrate von 20 K/min.

**2.** Haftklebstoffzusammensetzung nach Anspruch 1, wobei die Haftklebstoffzusammensetzung wenigstens einen Klebrigmacher in einer Menge von 5 bis 40 Gewichtsteilen, bezogen auf 100 Gewichtsteile Polymer, umfasst.

**3.** Haftklebstoffzusammensetzung nach Anspruch 1 oder 2, wobei der Klebrigmacher ausgewählt ist aus der Gruppe bestehend aus natürlichen Harzen, Kohlenwasserstoffharzen, klebrigmachenden Polyacrylaten und Gemischen davon.

**4.** Haftklebstoffzusammensetzung nach einem der Ansprüche 1 bis 3, wobei Monomer (v) in einer Menge von 5 bis 30 Gew.-%, bezogen auf die Summe aller Monomere, verwendet wird.

**5.** Haftklebstoffzusammensetzung nach einem der Ansprüche 1 bis 4, wobei Monomer (v) ausgewählt ist aus n-Butylacrylat und 2-Octylacrylat.

**6.** Haftklebstoffzusammensetzung nach dem vorstehenden Anspruch, wobei wenigstens die Kohlenstoffatome der Isobutylgruppe von Isobutylacrylat (i) und/oder die Kohlenstoffatome der 2-Octylgruppe von 2-Octylacrylat und/oder die Kohlenstoffatome der 1-Octylgruppe von 1-Octylacrylat von biologischem Ursprung sind, bestimmt nach den Standards ASTM D 6866-12, dem Verfahren B ASTM D 6866-06 und ASTM D 7026-04.

**7.** Haftklebstoffzusammensetzung nach einem der Ansprüche 1 bis 6, wobei Monomer (vi) 2-Hydroyxyethylacrylat in einer Menge von 0,5 bis 5 Gew.-%, bezogen auf die Summe aller Monomere, umfasst.

**8.** Haftklebstoffzusammensetzung nach einem der Ansprüche 1 bis 7, wobei Monomer (vi) 2-(2-Oxoimidazolidin-1-yl) ethylmethacrylat in einer Menge von 0,1 bis 2 Gew.-%, bezogen auf die Summe aller Monomere, umfasst.

**9.** Haftklebstoffzusammensetzung nach einem der Ansprüche 1 bis 8, wobei Monomer (vii) in einer Menge von 0 bis 20 Gew.-%, bezogen auf die Summe aller Monomere, verwendet wird und wenigstens ein von Monomeren (i), (ii) und (v) verschiedenes Monomer ausgewählt aus Alkyl(meth)acrylaten mit 1 bis 20 Kohlenstoffatomen in der Alkylgruppe, vorzugsweise Methylacrylat oder Methylmethacrylat, ist.

**10.** Haftklebstoffzusammensetzung nach einem der Ansprüche 1 bis 9, umfassend wenigstens ein Haftklebstoffpolymer, das gebildet ist durch Emulsionspolymerisation von

(i) von 10 bis 20 Gew.-%, bezogen auf die Summe aller Monomere, Isobutylacrylat;
(ii) von 40 bis 60 Gew.-%, bezogen auf die Summe aller Monomere, 2-Ethylhexylacrylat, 1-Octylacrylat oder an einem Gemisch von 2-Ethylhexylacrylat und 1-Octylacrylat;
(iii) von 10 bis 20 Gew.-%, bezogen auf die Summe aller Monomere, Styrol;
(iv) von 0,5 bis 5 Gew.-%, bezogen auf die Summe aller Monomere, an wenigstens einem Monomer mit wenigstens einer Säuregruppe ausgewählt aus Acrylsäure, Methacrylsäure und Itaconsäure;
(v) von 5 bis 30 Gew.-%, bezogen auf die Summe aller Monomere, an wenigstens einem Monomer ausgewählt aus n-Butylacrylat und 2-Octylacrylat;
(vi) von 0,5 bis 5 Gew.-%, bezogen auf die Summe aller Monomere, 2-Hydroxyethylacrylat und von 0,1 bis 2 Gew.-%, bezogen auf die Summe aller Monomere, 2-(2-Oxoimidazolidin-1-yl)ethylmethacrylat;
(vii) von 0 bis 20 Gew.-%, bezogen auf die Summe aller Monomere, an wenigstens einem von Monomeren (i), (ii)

und (v) verschiedenen Alkyl(meth)acrylatmonomer ausgewählt aus Alkyl(meth)acrylaten mit 1 bis 20 Kohlenstoffatomen in der Alkylgruppe;
(viii) von 0 bis 10 Gew.-% an weiteren von Monomeren (i) bis (vii) verschiedenen Monomeren ausgewählt aus Vinylestern von Carbonsäuren, die bis zu 20 Kohlenstoffatome umfassen, Vinylaromaten, die von Styrol verschieden sind und bis zu 20 Kohlenstoffatome umfassen, ethylenisch ungesättigten Nitrilen, Vinylhalogeniden, Vinylethern von Alkoholen, die 1 bis 10 Kohlenstoffatome umfassen, aliphatischen Kohlenwasserstoffen mit 2 bis 8 Kohlenstoffatomen und einer oder zwei Doppelbindungen und (Meth)acrylamiden.

**11.** Verwendung einer Haftklebstoffzusammensetzung nach einem der vorstehenden Ansprüche zur Herstellung von selbstklebenden Etiketten, selbstklebenden Bändern oder selbstklebenden Folien.

**12.** Selbstklebender Gegenstand, beschichtet mit einer Haftklebstoffzusammensetzung nach einem der Ansprüche 1 bis 10.

**13.** Verfahren zur Herstellung eines selbstklebenden Gegenstands, wobei das Verfahren den Schritt des Beschichtens wenigstens eines Teils einer Oberfläche eines Substrats mit einer Haftklebstoffzusammensetzung nach einem der Ansprüche 1 bis 10 umfasst.

## Revendications

**1.** Composition adhésive sensible à la pression sous la forme d'une dispersion aqueuse de polymère comprenant au moins un polymère adhésif sensible à la pression dispersé formé par polymérisation en émulsion de

(i) 10 à 20 % en poids, par rapport à la somme de tous les monomères, d'acrylate d'isobutyle ;
(ii) 30 à 70 % en poids, par rapport à la somme de tous les monomères, d'acrylate de 2-éthylhexyle, d'acrylate de 1-octyle ou d'un mélange d'acrylate de 2-éthylhexyle et d'acrylate de 1-octyle ;
(iii) 10 à 20 % en poids, par rapport à la somme de tous les monomères, de styrène ;
(iv) 0,1 % à 10 % en poids, par rapport à la somme de tous les monomères, d'au moins un monomère comportant au moins un groupe acide ;
(v) facultativement au moins un monomère d'ester d'alkyle de (méth)acrylate différent des monomères (i) et (ii) et présentant, lorsqu'il est polymérisé sous forme d'homopolymère, une température de transition vitreuse inférieure à -20 °C ;
(vi) facultativement au moins un monomère fonctionnel choisi parmi les monomères de (méth)acrylate à fonction hydroxyle et les monomères éthyléniquement insaturés substitués par uréido ;
(vii) facultativement au moins un monomère d'ester d'alkyle de (méth)acrylate différent de (i), (ii) et (v) ;
(viii) facultativement d'autres monomères, différents de (i) à (vii),
dans laquelle le rapport pondéral de l'acrylate d'isobutyle (i) à l'acrylate de 2-éthylhexyle, à l'acrylate de 1-octyle ou au mélange d'acrylate de 2-éthylhexyle et d'acrylate de 1-octyle (ii) est de 1:1,5 à 1:5 ;
dans laquelle le rapport pondéral de l'acrylate d'isobutyle (i) au styrène (iii) est de 1:5 à 5:1, de préférence de 1:2 à 2:1 ;
dans laquelle la température de transition vitreuse du polymère adhésif sensible à la pression est inférieure à -20 °C, de préférence de -45 à -25 °C, déterminée par calorimétrie différentielle à balayage comme étant la température médiane lors de l'évaluation de la deuxième courbe de chauffage à une vitesse de chauffage de 20 K/min.

**2.** Composition adhésive sensible à la pression selon la revendication 1, dans laquelle la composition adhésive sensible à la pression comprend au moins un agent poisseux en une quantité de 5 à 40 parties en poids, pour 100 parties en poids de polymère.

**3.** Composition adhésive sensible à la pression selon la revendication 1 ou 2, dans laquelle l'agent poisseux est choisi dans le groupe constitué par les résines naturelles, les résines hydrocarbonées, les polyacrylates poisseux ou des mélanges de ceux-ci.

**4.** Composition adhésive sensible à la pression selon l'une quelconque des revendications 1 à 3, dans laquelle le monomère (v) est utilisé en une quantité de 5 à 30 % en poids, par rapport à la somme de tous les monomères.

**5.** Composition adhésive sensible à la pression selon l'une quelconque des revendications 1 à 4, dans laquelle le

monomère (v) est choisi parmi l'acrylate de n-butyle et l'acrylate de 2-octyle.

**6.** Composition adhésive sensible à la pression selon la revendication précédente, dans laquelle au moins les atomes de carbone du groupe isobutyle de l'acrylate d'isobutyle (i) et/ou les atomes de carbone du groupe 2-octyle de l'acrylate de 2-octyle et/ou les atomes de carbone du groupe 1-octyle de l'acrylate de 1-octyle sont d'origine biologique, comme déterminé selon les normes ASTM D 6866-12, ASTM D 6866-06 (méthode B) et ASTM D 7026-04.

**7.** Composition adhésive sensible à la pression selon l'une quelconque des revendications 1 à 6, dans laquelle le monomère (vi) comprend de l'acrylate de 2-hydroxyéthyle en une quantité de 0,5 à 5 % en poids, par rapport à la somme de tous les monomères.

**8.** Composition adhésive sensible à la pression selon l'une quelconque des revendications 1 à 7, dans laquelle le monomère (vi) comprend du méthacrylate de 2-(2-oxoimidazolidin-1-yl)éthyle en une quantité de 0,1 à 2 % en poids, par rapport à la somme de tous les monomères.

**9.** Composition adhésive sensible à la pression selon l'une quelconque des revendications 1 à 8, dans laquelle le monomère (vii) est utilisé en une quantité de 0 à 20 % en poids, par rapport à la somme de tous les monomères, et est au moins un monomère différent des monomères (i), (ii) et (v), et choisi parmi les (méth)acrylates d'alkyle ayant de 1 à 20 atomes de carbone dans le groupe alkyle, de préférence l'acrylate de méthyle ou le méthacrylate de méthyle.

**10.** Composition adhésive sensible à la pression selon l'une quelconque des revendications 1 à 9, comprenant au moins un polymère adhésif sensible à la pression formé par polymérisation en émulsion de

(i) 10 à 20 % en poids, par rapport à la somme de tous les monomères, d'acrylate d'isobutyle ;
(ii) 40 à 60 % en poids, par rapport à la somme de tous les monomères, d'acrylate de 2-éthylhexyle, d'acrylate de 1-octyle ou d'un mélange d'acrylate de 2-éthylhexyle et d'acrylate de 1-octyle ;
(iii) 10 à 20 % en poids, par rapport à la somme de tous les monomères, de styrène
(iv) 0,5 % à 5 % en poids, par rapport à la somme de tous les monomères, d'au moins un monomère comportant au moins un groupe acide, choisi parmi l'acide acrylique, l'acide méthacrylique et l'acide itaconique ;
(v) 5 à 30 % en poids, par rapport à la somme de tous les monomères, d'au moins un monomère choisi parmi l'acrylate de n-butyle et l'acrylate de 2-octyle ;
(vi) 0,5 à 5 % en poids, par rapport à la somme de tous les monomères, d'acrylate de 2-hydroxyéthyle et de 0,1 à 2 % en poids, par rapport à la somme de tous les monomères, de méthacrylate de 2-(2-oxoimidazolidin-1-yl)éthyle ;
(vii) 0 à 20 % en poids, par rapport à la somme de tous les monomères, d'au moins un monomère (méth)acrylate d'alkyle différent des monomères (i), (ii) et (v), et choisi parmi les (méth)acrylates d'alkyle ayant de 1 à 20 atomes de carbone dans le groupe alkyle ;
(viii) 0 à 10 % en poids d'autres monomères distincts des monomères (i) à (vii), choisis parmi les esters vinyliques d'acides carboxyliques comprenant jusqu'à 20 atomes de carbone, les composés vinylaromatiques différents du styrène et comportant jusqu'à 20 atomes de carbone, les nitriles éthyléniquement insaturés, les halogénures de vinyle, les éthers vinyliques d'alcools comprenant de 1 à 10 atomes de carbone, les hydrocarbures aliphatiques comportant de 2 à 8 atomes de carbone et une ou deux doubles liaisons, et les (méth)acrylamides.

**11.** Utilisation d'une composition adhésive sensible à la pression selon l'une quelconque des revendications précédentes pour la fabrication d'étiquettes autocollantes, de rubans autocollants ou de films autocollants.

**12.** Article autocollant revêtu d'une composition adhésive sensible à la pression selon l'une quelconque des revendications 1 à 10.

**13.** Procédé de fabrication d'un article autocollant, le procédé comprenant l'étape de revêtement d'au moins une partie d'une surface d'un substrat d'une composition adhésive sensible à la pression selon l'une quelconque des revendications 1 à 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20200017725 A1
- EP 1426428 A1
- EP 2290045 A1
- EP 2290034 A1
- EP 2626397 A1
- EP 81083 A
- WO 2013117428 A


### Non-patent literature cited in the description


- **T.G. FOX**. *Bull. Am. Phys. Soc.*, 1956, vol. 1, 123
- Ullmann's Encyclopedia of Industrial Chemistry. Verlag Chemie, 1980, vol. 19, 18
- Ullmann's Encyclopedia of Industrial Chemistry. VCH Weinheim, 1992, vol. 5, 169
- **J. BRANDRUP** ; **E.H. IMMERGUT**. Polymer Handbook. J. Wiley, 1966
- Houben-Weyl, Methoden der organischen Chemie [Methods of Organic Chemistry. Makromolekulare Stoffe [Macromolecular Materials. Georg-Thieme-Verlag, 1961, vol. XIV, 411-420
- *Tackifiers are known for example from Adhesive Age*, July 1987, 19-23
- *Polym. Mater. Sci. Eng.*, 1989, vol. 61, 588-592